# EUROPEAN PATENT SPECIFICATION

(11) **EP 3 277 392 B1**
(45) Date of publication and mention of the grant of the patent: **20.01.2021**
(21) Application number: 16774072.9
(22) Date of filing: 30.03.2016
(51) Int. Cl.: A63C 19/06, G09F 19/12, G09F 19/14, G09F 19/22, A01G 13/06, G09F 23/00

(54) **A CHLOROPHYLL-BASED AGENT FOR MARKING LIVING GREENERY**
CHLOROPHYLLBASIERTES MITTEL ZUM MARKIEREN VON LEBENDEN GRÜNPFLANZEN
AGENT À BASE DE CHLOROPHYLLE PERMETTANT LE MARQUAGE DE VÉGÉTAUX VIVANTS

(43) Date of publication of application: 07.02.2018
(73) Proprietor: Shinyfield, Miami, FL 33178 (US); Ceccetto Dasso, Juan Ignacio Gerardo, 1107 Puerto Madero - Buenos Aires (AR)
(72) Inventor: CECCETTO DASSO, Juan Ignacio, Gerardo, CP 1107 Puerto Madero - Buenos Airs (AR); TRAFICANTE, Gabriel, CP 1107 Puerto Madero - Buenos Airs (AR)
(74) Representative: Romano, Giuseppe
(86) International application number: PCT/US2016/024930
(87) International publication number: WO 2016/160931

(56) References cited:
- WO-A1-00/42843
- AU-B2- 772 058
- KR-A- 20100 079 422
- US-A- 2 185 663
- US-A- 5 052 618
- US-A- 5 252 118
- US-A- 5 540 516
- US-A1- 2004 213 926
- US-A1- 2010 024 265
- US-A1- 2012 253 613
- US-A1- 2013 034 671
- US-A1- 2013 247 463

## Description

### BACKGROUND

The present invention relates to the field of botanical treatments and, more particularly, to a chlorophyll-based agent for marking living greenery.

There are a variety of reasons that people want or need to mark living greenery like grass and shrubs. A common reason is sports or related outdoor activities. For example, the korean patent application KR 2010/0079422 describes a product containing a natural dye, such as chlorophyll, and the method using the same for colouring lawns, specifically grass, more specifically yellow grass, to satisfy the needs of a growing population of golf players who want green grass in the golf courses also in the winter season.
Boundaries and other important markings are often applied to the grass field using a chalk-like powder or a paint. Further, advertisements, team or company logos are also commonly marked upon grass or other ground cover at sports events and other outdoor venues.

These means create markings that are viewable by everyone, people watching at the venue and on television as well as the players on the field. The quantity and placement of the markings are limited in order to not distract the players. Thus, great swaths of greenery are often deemed unusable for this purpose. This translates into large areas that have the potential for revenue via advertisement if the markings did not interfere with the activities of people located on that area.

Therefore, what is needed is a means of marking living greenery that is only noticeable from a distance by viewers. For example, advertisements that are viewable by the people in the stands of an arena, but not by the players on the field.

### BRIEF SUMMARY

One aspect of the present invention includes an outdoor marking product according to the features of claim 1 comprising a chlorophyll-based agent for highlighting living greenery. The chlorophyll-based agent can be non-detrimental to the health of the living greenery. When viewed by a viewer at a minimum predefined viewing distance, the living greenery treated with the chlorophyll-based agent can be visibly distinguishable from and shinier than neighboring untreated living greenery. When the viewer is nearer than the minimum predefined viewing distance, the difference in shine and color between the treated living greenery and the untreated living greenery can be substantially unnoticeable.

Another aspect of the present invention includes a landscaping method according to the features of claim 8 that involves applying a chlorophyll-based agent to living greenery according to a predetermined pattern. The chlorophyll-based agent can increase shine and alter a shade of green of the living greenery when viewed by a viewer at a minimum predefined viewing distance. The chlorophyll-based agent can be non-detrimental to the health of the living greenery. When the viewer is nearer than the minimum predefined viewing distance, the difference in the shine and the shade of green between treated living greenery and untreated living greenery can be substantially unnoticeable.

### BRIEF DESCRIPTION OF THE SEVERAL VIEWS OF THE DRAWINGS

FIG. 1 is a flowchart of a method describing the general use of a chlorophyll-based agent in accordance with embodiments of the inventive arrangements disclosed herein.
FIG. 2 is a block diagram of a system for utilizing a chlorophyll-based agent in accordance with embodiments of the inventive arrangements disclosed herein.
FIG. 3 is a diagram graphically illustrating the effect of viewing distance on markings made with the chlorophyll-based agent in accordance with embodiments of the inventive arrangements disclosed herein.

### DETAILED DESCRIPTION

The present invention discloses a distance-dependent means of marking living greenery. A chlorophyll-based agent is applied to living greenery to create a shiny, green-tinted marking that is viewable within a predefined viewing distance range. Markings viewed at closer distances can be relatively unnoticeable to the viewer.

As will be appreciated by one skilled in the art, aspects of the present invention may be embodied as a method. Aspects of the present invention are described below with reference to flowchart illustrations and/or block diagrams of methods according to embodiments of the invention.

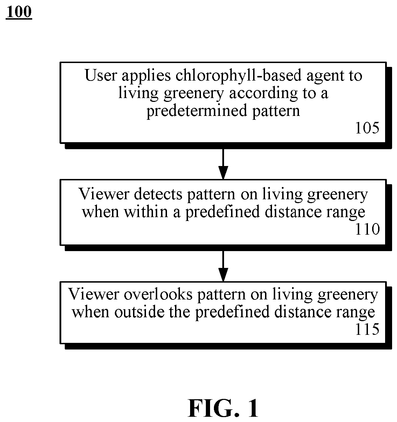

FIG. 1 is a flowchart of a method 100 describing the general use of a chlorophyll-based agent in accordance with embodiments of the inventive arrangements disclosed herein. Method 100 can begin in step 105 where a user can apply the chlorophyll-based agent to living greenery according to a predetermined pattern. Living greenery, as used herein, can refer to green-colored plants and/or plant elements.

The chlorophyll-based agent is a product that utilizes natural chlorophyll to create a shiny, green-tinted coating on the living greenery. The chlorophyll-based agent can be applied to the living greenery, in step 105, in a variety of ways commensurate with the specific formulation of the chlorophyll-based agent.

The predetermined pattern can represent the overall design or marking (e.g., graphic, text, line, shape, etc.) to be drawn upon the living greenery with the chlorophyll-based agent. The pattern can be applied in a manner that is compatible with the application means and the type of pattern. For example, a company logo can be applied to a grass field using a stencil and sprayer.

In step 110, a viewer can detect the pattern on the living greenery when within a predefined range of viewing distances. The viewer can overlook the pattern on the living greenery when outside (i.e., closer than the minimum or farther than the maximum) the predefined range of viewing distances in step 115. The predefined range of viewing distances can represent the minimum and maximum distances at which the pattern is visible by the viewer. The predefined distance range can vary based upon how thick a coating of the chlorophyll-based agent is applied to the living greenery.

For example, a typical application of the chlorophyll-based agent can have a predefined distance range with a minimum value of as 1 meter (1.1 yard) and a maximum value of 549 meters (600 yards).

Additionally, the predefined viewing distance can also require that the viewer have a viewing angle of at least 20° in order for the pattern to be seen. This viewing angle can allow environmental light to be properly reflected by the chlorophyll-based agent to make the pattern recognizable to the viewer.

While the steps of method 100 may appear ordinary, it can be important to note that conventional marking agents for living greenery are visible to a viewer at most viewing distances, though clarity of the pattern may vary. For example, when the name of a team sponsor is applied to a soccer field using conventional paint, the name can be clearly seen at distance by people in the stands and by cameras. Players on the field can also see the painted grass on the field, though they may be unable to discern the name. This painted grass can be distracting to the players, so such markings may be limited or disallowed.

Applying the sponsor name using the chlorophyll-based agent can result in the people in the stands and cameras being able to view the name at a distance without the players on the field noticing the name. Since the chlorophyll-based agent is not distracting to the players, areas of the field can be used for advertising, increasing revenue for the team and/or field.

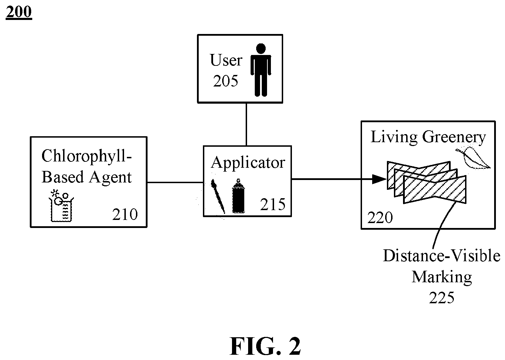

FIG. 2 is a block diagram of a system 200 for utilizing a chlorophyll-based agent 210 in accordance with embodiments of the inventive arrangements disclosed herein. System 200 can perform the steps of method 100.

In system 200, a user 205 can use an applicator 215 to apply a chlorophyll-based agent 210 to living greenery 220, creating distance-visible markings 225. The user 205 can represent a person or computer system and/or program capable of controlling the applicator 215.

The living greenery 220 can represent an area of green vegetation and/or plant life. Examples of living greenery can include, but are not limited to, ground cover plants, grass, moss, ivy, the foliage of a tree, the foliage of a bush, the foliage of a shrub, the foliage of a plant, a non-woody plant stem, and the like.

The living greenery can be a part of and/or associated with a different types of locations, outdoor as well as indoor. Examples of such locations can include, but are not limited to, a sports venue (e.g., soccer field, baseball field, etc.), an entertainment venue, an agricultural area, a forest, a nature park, a pasture, a rainforest, and the like.

The chlorophyll-based agent 210 is a mixture that utilizes natural chlorophyll to create a distance-visible marking 225 on the living greenery 220. The distance-visible marking 225 is a shiny, green-tinted coating that is only visible to a viewer at a predefined viewing distance. The formulation of the chlorophyll-based agent 210 according to the invention is as follows:

| Component | Percentage (per 100L) |
|---|---|
| Acrylic Emulsion | 60 |
| Water | 35.25 |
| Bactericide | 0.4 |
| Antifoam Agent | 0.15 |
| Wetting Agent | 0.2 |
| Coalescent | 1 |
| Cellulose Thickener | 0.2 |
| pH Regulator | 0.3 |
| Green Pigment Bc | 2 |
| Chlorophyll Pigment | 0.5 |

The chlorophyll-based agent 210 can be permanent, yet non-detrimental to the health of the underlying living greenery 220. That is, unlike conventional paints and dyes used on living greenery 220, the chlorophyll-based agent 210 can allow the living greenery 220 of the distance-visible markings 225 to function normally. This can be achieved through a unique formulation that allows the formation of voids in the coating the chlorophyll-based agent 210 that allow sunlight to reach the leaf without reducing the effectiveness of the chlorophyll-based agent 210.

For example, grass 220 treated with the chlorophyll-based agent 210 can continue to grow naturally. A conventional grass paint can inhibit the ability of the grass 220 to breathe and photosynthesize, causing the grass 220 to die.

Like many conventional marking treatments, the chlorophyll-based agent 210 can be removed from the living greenery 220 via removal or pruning. For example, a logo 225 applied to grass 220 can be removed from a sports field when the portion of the grass blades 220 coated by the chlorophyll-based agent 210 are severed during mowing.

The chlorophyll-based agent 210 can be applied to the living greenery 220 using an applicator 215 that is commensurate with the specific formulation of the chlorophyll-based agent 210. Examples of the applicator 215 can include, but are not limited to, a brush, a spray can or bottle, a pneumatic sprayer, a roller, a machine that utilizes one or more of these means, and the like. One liter of the chlorophyll-based agent 210 can be used to coat 16 square meters of living greenery 220.

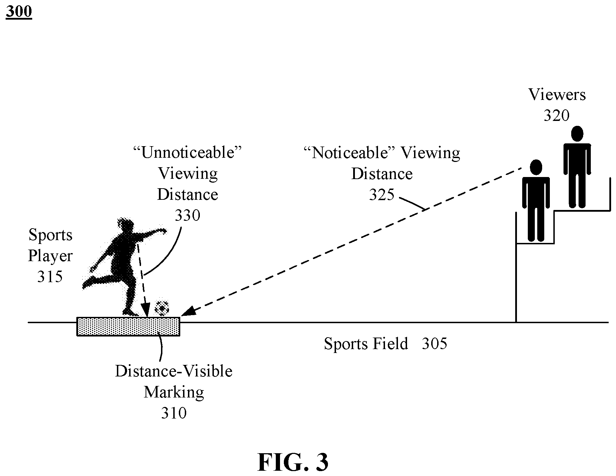

FIG. 3 is a diagram 300 graphically illustrating the effect of viewing distance 325 and 330 on markings 310 made with the chlorophyll-based agent in accordance with embodiments of the inventive arrangements disclosed herein. Diagram 300 can embody an example use of the chlorophyll-based agent in a sports setting.

The sports field 305 can be comprised of living greenery, most likely a variety of grass. At one or more designated locations, distance-visible markings 310 can be applied to the grass of the sports field 305.

When a sporting event is played on the sports field 305, one or more sports players 315 can move around on the sports field 305. It can be likely for a sports player 315 to pass over a distance-visible marking 310 during this event. The sports player's 315 field of vision can include the distance-visible marking 310. The viewing distance 330 (i.e., the distance from their eyes to the distance-visible marking 310) of the sports player 315 can be relatively small, allowing the distance-visible marking 310 to appear unnoticeable to the sports player 315.

Viewers 320 of the sporting event can be situated farther away from the sports field 305 and distance-visible markings 310. At this viewing distance 325, the distance-visible marking 310 can be seen or noticed by the viewers 320.

In another contemplated embodiment, the viewers 320 can include photographic and/or video cameras.

The diagrams in the Figures illustrate the architecture, functionality, and operation of possible implementations of systems and methods according to various embodiments of the present invention. It will also be noted that each block of the block diagrams and combinations of blocks in the block diagrams can be implemented by special purpose hardware-based systems that perform the specified functions or acts, or combinations of special purpose hardware and computer instructions.

## Claims

1. An outdoor marking product comprising:
a chlorophyll-based agent (210) for highlighting living greenery (220); wherein the chlorophyll-based agent (210) contains 60% in volume of an acrylic emulsion, 35.25% in volume of water, 0.4% in volume of bactericide, 0.15 % in volume of an antifoam agent, 0.2% in volume of a wetting agent, 1% in volume of a coalescent agent, 0.2% in volume of a cellulose thickener, 0.3% in volume of a pH regulator, 2% in volume of a green pigment, and 0.5% in volume of a chlorophyll pigment; wherein said chlorophyll-based agent is non-detrimental to a health of the living greenery, wherein, when viewed by a viewer at a minimum predefined viewing distance, living greenery treated with the chlorophyll-based agent is visibly distinguishable from and shinier than neighboring untreated living greenery (110), wherein, when the viewer is nearer than the minimum predefined viewing distance, a difference in shine and color between the treated living greenery and the untreated living greenery is substantially unnoticeable (115).

2. The marking product of claim 1, wherein the living greenery (220) comprises at least one of a ground cover, a grass, a moss, an ivy, foliage of a tree, foliage of a bush, foliage of a shrub, foliage of a plant, and a non- woody plant stem.

3. The marking product of claim 1, wherein, when viewed at the minimum predefined viewing distance, the treated living greenery is recognizable as text.

4. The marking product of claim 1, wherein, when viewed at the minimum predefined viewing distance, the treated living greenery is recognizable as a graphical image (225).

5. The marking product of claim 1, wherein an application means (215) for the chlorophyll-based agent comprises at least one of a brush, a roller, a sprayer, an aerosol can, and a machine that utilizes at least one such means.

6. The marking product of claim 1, wherein a thickness of a coating of the chlorophyll-based agent on the treated living greenery provides a substantial degree of frost protection when said treated living greenery is exposed to frost-producing environmental conditions.

7. The marking product of claim 1, wherein the minimum predefined viewing distance is one meter.

8. An outdoor method and/or landscaping method comprising:
applying the chlorophyll-based agent of claim 1 to living greenery according to a predetermined pattern (105), wherein the chlorophyll-based agent increases shine and alters a shade of green of said living greenery when viewed by a viewer at a minimum predefined viewing distance (110), wherein said chlorophyll-based agent is non-detrimental to a health of the living greenery, wherein, when the viewer is nearer than the minimum predefined viewing distance, a difference in the shine and the shade of green between treated living greenery and untreated living greenery is substantially unnoticeable (115).

9. The method of claim 8, wherein an application means (215) for the chlorophyll- based agent (210) comprises at least one of a brush, a roller, a sprayer, an aerosol can, and a machine that utilizes at least one such means.

10. The method of claim 8, wherein the living greenery (220) comprises at least one of a ground cover, a grass, a moss, an ivy, foliage of a tree, foliage of a bush, foliage of a shrub, foliage of a plant, and a non-woody plant stem.

11. The method of claim 8, wherein the pattern comprises at least one of text, a geometric shape, a line, and a graphical image (225).

12. The method of claim 8, wherein the minimum predefined viewing distance is one meter.

## Patentansprüche

1. Ein Außenmarkierungsprodukt, umfassend:
ein Mittel auf Chlorophyllbasis (210) zur Hervorhebung von lebendem Grün (220); wobei das Mittel auf Chlorophyllbasis (210) 60 Vol.-% einer Acrylemulsion, 35,25 Vol.-% Wasser, 0,4 Vol.-% eines Bakterizids, 0,15 Vol.-% eines Antischaummittels, 0,2 Vol.-% eines Benetzungsmittels, 1 Vol.-% eines Koaleszenzmittels, 0,2 Vol.-% eines Celluloseverdickers, 0,3 Vol.-% eines pH-Reglers, 2 Vol.-% eines grünen Pigments und 0,5 Vol.-% eines Chlorophyllpigments enthält;
wobei das Mittel auf Chlorophyllbasis für die Gesundheit des lebenden Grün nicht schädlich ist,
wobei bei Betrachtung durch einen Betrachter in einem vordefinierten Mindestbetrachtungsabstand oder von weiter entfernt dieses lebende Grün, das mit dem Mittel auf Chlorophyllbasis (210) behandelt wurde, sichtbar von benachbarten unbehandeltem lebendem Grün (110) unterscheidbar und glänzender ist als Letzteres (110),
wobei, wenn der Betrachter näher als der vordefinierte Mindestbetrachtungsabstand ist, ein Unterschied in Glanz und Farbe zwischen dem behandelten lebenden Grün und dem unbehandelten lebenden Grün im Wesentlichen nicht wahrnehmbar ist (115).

2. Ein Markierungsprodukt gemäß Anspruch 1, wobei das lebende Grün (220) mindestens eine Bodenbedeckung, Gras, Moos, Efeu, Laub eines Baumes, Laub eines Busches, Laub eines Strauchs, Laub einer Pflanze und eines nicht-holzigen Pflanzenstammes umfasst.

3. Ein Markierungsprodukt gemäß Anspruch 1, wobei bei Betrachtung mit dem vordefinierten Mindestbetrachtungsabstand das behandelte lebende Grün (210) die aufgebrachte Markierung als Text erkennbar ist.

4. Ein Markierungsprodukt gemäß Anspruch 1, wobei bei Betrachtung mit dem vordefinierten minimalen Betrachtungsabstand das behandelte lebende Grün (210) die aufgebrachte Markierung als grafisches Bild (225) erkennbar ist.

5. Ein Markierungsprodukt gemäß Anspruch 1, wobei ein Auftragsmittel (215) für das Mittel auf Chlorophyllbasis mindestens einen Pinsel, eine Walze, ein Sprühgerät, eine Aerosoldose und/oder ein Gerät umfasst, die mindestens ein solches Mittel verwendet.

6. Ein Markierungsprodukt gemäß Anspruch 1, wobei eine Dicke einer Beschichtung des Mittels auf Chlorophyllbasis auf dem behandelten lebenden Grün einen wesentlichen Grad an Frostschutz bereitstellt, wenn das behandelte lebende Grün frostigen Umgebungsbedingungen ausgesetzt ist.

7. Ein Markierungsprodukt gemäß Anspruch 1, wobei der minimale vordefinierte Betrachtungsabstand einen Meter beträgt.

8. Ein Außenmarkierugsverfahren und / oder ein Landschaftsgestaltungsverfahren,
umfassend:
das Aufbringen des auf Chlorophyll basierenden Mittels auf lebendem Grün nach Anspruch 1 gemäß einem vorbestimmten Muster (105), wobei das auf Chlorophyll basierende Mittel den Glanz erhöht und einen Grünton des lebenden Grün verändert, wenn es von einem Betrachter bei einem vordefinierten minimalen Betrachtungsabstand betrachtet wird (110),
wobei das Mittel auf Chlorophyllbasis für die Gesundheit des lebenden Grün nicht schädlich ist,
wobei, wenn der Betrachter näher als der minimale vordefinierte Betrachtungsabstand ist, ein Unterschied im Glanz und im Grünton zwischen behandeltem lebendem Grün und unbehandeltem lebendem Grün im Wesentlichen nicht wahrnehmbar (115) ist.

9. Ein Verfahren gemäß Anspruch 8, wobei ein Applikationsmittel (215) für das Mittel auf Chlorophyllbasis (210) mindestens eine Bürste, eine Walze, ein Sprühgerät, eine Aerosoldose und /oder ein Gerät umfasst, die mindestens ein solches Mittel verwendet.

10. Ein Verfahren gemäß Anspruch 8, wobei das lebende Grün (220) mindestens eine Bodenbedeckung, Gras, Moos, Efeu, Laub eines Baumes, Laub eines Busches, Laub eines Strauchs, Laub einer Pflanze und eines nicht-holzigen Pflanzenstamm umfasst.

11. Ein Verfahren gemäß Anspruch 8, wobei das Muster mindestens einen Text, eine geometrische Form, eine Linie und ein grafisches Bild (225) umfasst.

12. Ein Verfahren gemäß Anspruch 8, wobei der minimale vordefinierte Betrachtungsabstand einen Meter beträgt.

## Revendications

1. Un produit de marquage en extérieur qui comprend:
Un agent à base de chlorophylle (210) permettant de mettre en valeur les plantes vertes vivantes (220) ;
l'agent à base de chlorophylle (210) contenant 60 % en volume d'une émulsion acrylique, 35,25 % en volume d'eau, 0,4% en volume de bactéricide, 0,15 % en volume d'un agent anti-mousse, 0,2 % en volume d'un agent mouillant, 1 % en volume d'un agent de couverture, 0,2 % en volume d'un épaississant à base de cellulose, 0,3 % en volume d'un régulateur de pH, 2 % en volume d'un pigment vert et 0,5 % en volume d'un pigment chlorophylle ; ledit agent à base de chlorophylle étant dépourvu d'effets négatifs sur la santé des plantes vertes vivantes, lesquelles plantes vivantes traitées à l'aide de l'agent à base de chlorophylle, examinées depuis une distance minimale prédéfinie, sont visiblement reconnaissables comme plus brillantes que les plantes vertes environnantes non traitées (110), cette différence de couleur et de brillance étant sensiblement imperceptible par l'observateur situé plus près que la distance minimale d'observation prédéfinie (115).

2. Le produit de marquage décrit au point 1, les plantes vertes vivantes (220) se composant au minimum d'un des éléments suivants : couvre-sol, herbe, mousse, lierre, feuillage d'arbre, feuillage de buisson, feuillage d'arbuste, feuillage de plante, tige de plante non ligneuse.

3. Le produit de marquage décrit au point 1 permet, depuis la distance minimale d'observation prédéfinie, de reconnaître les plantes vertes vivantes traitées comme du texte.

4. Le produit de marquage décrit au point 1 permet, depuis la distance minimale d'observation prédéfinie, de reconnaître les plantes vertes vivantes traitées comme une image graphique (225).

5. Le produit de marquage décrit au point 1, l'application de l'agent à base de chlorophylle (215) s'effectuant à l'aide d'un au moins des éléments suivants : brosse, rouleau, un pulvérisateur, une bombe aérosol et une machine employant au moins l'un de ces moyens.

6. Le produit de marquage décrit au point 1 procure, à condition que soit appliquée une épaisseur suffisante de l'agent à base de chlorophylle sur les plantes vertes vivantes traitées, une protection substantielle contre le gel lorsque lesdites plantes vertes vivantes sont soumises à un environnement de froid artificiel.

7. Pour le produit de marquage décrit au point 1, la distance minimale de visualisation prédéfinie est un mètre.

8. Une méthode d'extérieur et/ou de paysage consistant en :
l'application sur des plantes vertes vivantes de l'agent à base de chlorophylle du point 1 suivant un motif prédéterminé (105), l'agent à base de chlorophylle accroissant la brillance et modifiant la nuance de vert desdites plantes vertes pour un observateur situé à une distance minimale de visualisation (110),
sachant que ledit agent à base de chlorophylle ne comporte pas d'effets négatifs sur la santé des plantes vertes vivantes et que la différence de brillance et de nuance de vert entre les plantes vertes vivantes traitées et non traitées n'est pas remarquable pour un observateur situé à une distance inférieure à la distance minimale de visualisation prédéfinie (115).

9. La méthode décrite au point 8, l'application de l'agent à base de chlorophylle (215) s'effectuant à l'aide d'un au moins des éléments suivants : brosse, rouleau, un pulvérisateur, une bombe aérosol et une machine employant au moins l'un de ces moyens.

10. La méthode décrite au point 8, les plantes vertes vivantes (220) se composant au minimum de l'un des éléments suivants : couvre-sol, herbe, mousse, lierre, feuillage d'arbre, feuillage de buisson, feuillage d'arbuste, feuillage de plante, tige de plante non ligneuse.

11. La méthode décrite au point 8, le motif comprenant au minimum un texte, une forme géométrique, une ligne et une image graphique (225).

12. La méthode décrite au point 8, où la distance minimale de visualisation prédéfinie est un mètre.
